# EUROPÄISCHE PATENTSCHRIFT

(11) **EP 0 533 919 B1**
(45) Veröffentlichungstag und Bekanntmachung des Hinweises auf die Patenterteilung: **05.06.1996**
(21) Anmeldenummer: 92921696.8
(22) Anmeldetag: 17.03.1992
(51) Int. Cl.: G01L 19/06

(54) **Einrichtung zum Schutz von Druckaufnehmern vor Aggressiven Messmedien**
Device for protecting pressure detectors from aggressive measuring media
DISPOSITIF DE PROTECTION DE CAPTEURS DE PRESSION CONTRE DES MILIEUX AGRESSIFS DE MESURE

(30) Priorität: 27.03.1991 DE 9103769 U
(43) Veröffentlichungstag der Anmeldung: 31.03.1993
(73) Patentinhaber: SIEMENS AKTIENGESELLSCHAFT, D-80333 München (DE)
(72) Erfinder: Marcaux, Günter, W-7500 Karlsruhe 21 (DE)
(86) Internationale Anmeldenummer: DE9200227
(87) Internationale Veröffentlichungsnummer: WO9217758

(56) Entgegenhaltungen:
- DE-A- 2 531 849
- FR-A- 1 406 298
- PATENT ABSTRACTS OF JAPAN vol. 6, no. 112 (P-124)(990) 23. Juni 1982& JP-A-57 042 831

## Beschreibung

Die Erfindung bezieht sich auf ein Meßgerät zur paramagnetischen Sauerstoffmessung gemäß dem Oberbegriff des Anspruchs 1.

Moleküle paramagnetischer Gase, zu denen auch Sauerstoff gehört, erfahren in einem inhomogenen Magnetfeld eine Beschleunigung in Richtung höherer Feldstärke, wodurch ein Druckgradient entsteht. Von diesem Phänomen leitet sich ein aus DE-A-25 31 849 bekanntes Meßverfahren her, bei dem ein Differenzdruck erzeugt und gemessen wird, der ein Maß der Suszeptibilitätsdifferenz des paramagnetischen Meßgases und eines Vergleichsgases ist.

Zur Druckmessung von Prozeßgasen werden aufgrund ihres geringen Raumbedarfs bevorzugt Druckaufnehmer mit einer piezoresistiven Halbleitermembran eingesetzt. Enthält das Meßmedium bzw. das Meßgas aggressive Bestandteile, müssen Druckaufnehmer mit Edelstahl-Trennmembranen verwendet werden, welche die empfindliche Meßmembran vor Korrosion oder chemischen Angriffen schützen. Es besteht die Forderung, anstelle der teuren Druckaufnehmer in korrosionsfester Ausführung die erheblich preiswerteren Aufnehmer ohne Trennmembranen und/oder in Kunststoffgehäusen einsetzen zu können.

Aus FR-A-14 06 298 ist bekannt, den Druck eines in einer Leitung strömenden Gases hoher Temperatur dadurch zu messen, daß ein Manometer nicht direkt, sondern über eine von Schutzgas durchströmte Anschlußleitung an das Rohr angeschlossen wird, in dem der Druck gemessen werden soll. Dadurch kann das Manometer auf einer niedrigen Temperatur gehalten werden. Auch wird das Gas, dessen Druck gemessen werden soll, vom Manometer ferngehalten.

Erfindungsgemäß wird das gemäß dem Oberbegriff des Anspruchs aufgebaute Meßgerät zur paramagnetischen Sauerstoffmessung derart ausgebildet, daß ein Druckaufnehmer über eine Anschlußleitung an die das Meßmedium führende Zu- oder die Ableitung der Meßkammer angeschlossen ist, daß eine Leitung eine das Vergleichsgas führende Leitung mit der Anschlußleitung verbindet, in der eine Gasströmung aufrechterhalten wird, die gleich oder um einiges größer ist als die Diffusionsgeschwindigkeit des Meßmediums in Richtung auf den Druckaufnehmer und daß mit dem Ausgangssignal des Druckaufnehmers das des Strömungsfühlers korrigiert wird.

Es wird also das zum Betrieb des Meßsystems benötigte Vergleichsgas, z. B. Stickstoff oder Luft, zugleich als Schutzgas für den Druckaufnehmer eingesetzt, welcher an die Meßgaszu- oder -ableitung der Meßkammer des Sauerstoffmeßgeräts angeschlossen ist, zum Zwecke der Korrektur des dem Sauerstoffgehalt des Meßgases entsprechenden Meßwertes bei schwankendem Meßgasdruck.

Durch entsprechende Ausbildung der Anschlußleitung, die an sich nur als druckleitende Verbindung ausgeführt sein muß, als Leitung mit sehr hohem Strömungswiderstand, beispielsweise als Kapillare, wird es möglich, eine Gasströmung in der Anschlußleitung aufrechtzuerhalten, die um eine bis zwei dezimale Größenordnungen kleiner ist als die Meßgasströmung in einer den Meßstellenanschluß enthaltenden Leitung. Durch entsprechende Einstellung des Schutzgasdrucks wird erreicht, daß die Strömung in der Anschlußleitung gleich oder um einiges größer ist als die Diffusionsgeschwindigkeit des Meßgases in Richtung auf den Druckaufnehmer, so daß ein vollständiger Schutz des Druckaufnehmers vor aggressiven Meßgasen bei vernachlässigbarer Beeinflussung des Meßergebnisses durch die Schutzgasbeaufschlagung erreicht wird. Es können so Meßwertaufnehmer auf Halbleiterbasis in Kunststoffgehäusen eingesetzt werden.

Zur Erläuterung der Erfindung ist in der
- Figur 1: das Funktionsprinzip einer Druckmeßeinrichtung dargestellt.
- Figur 2: zeigt ein Ausführungsbeispiel der Erfindung.

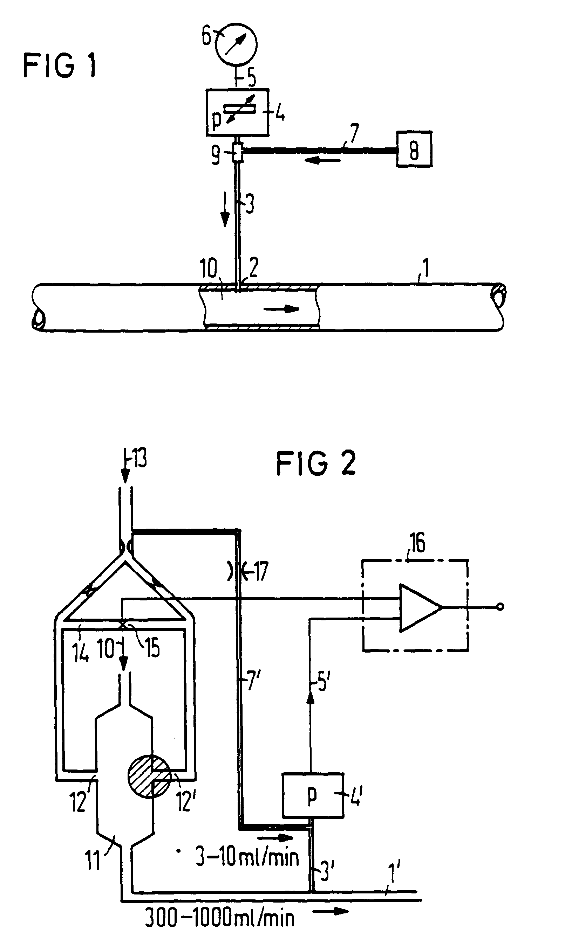

Figur 1: In einer Leitung 1 strömt ein Prozeßgas, im folgenden kurz Meßgas 10 genannt, welches aggressiv oder korrosiv wirkende Bestandteile aufweist und dessen Druck gemessen werden soll. Dazu ist der Druckmeßanschluß 2 in der Leitung 1 über eine Anschlußleitung 3, vorzugsweise eine Kapillare, mit dem Eingang 9 eines Druckaufnehmers 4 verbunden, dessen piezoresistive Meßmembran den anstehenden Druck in ein elektrisches Signal umsetzt, das über eine Ausgangsleitung 5 einem meßwertanzeigenden oder -verarbeitenden Gerät 6 zugeführt wird.

Um zu verhindern, daß Meßgas 10 aus der Leitung 1 über die Anschlußleitung 3 in den Druckaufnehmer 4 eintritt und dort zu Beschädigungen führt, ist die Anschlußleitung 3 in der Nähe oder am Eingang 9 des Druckaufnehmers 4 an eine Zuführungsleitung 7 angeschlossen, die aus einer Schutzgasquelle 8 einstellbaren Drucks gespeist wird.
Die Leitungen 3 und 7 weisen einen geringen Leitungsquerschnitt auf, d. h., sie besitzen einen hohen Strömungswiderstand (Kapillare), so daß der Volumenstrom des Schutzgases um einige dezimale Größenordnungen kleiner ist als der Volumenstrom des Meßgases 10 in der Leitung 1.

Figur 2 zeigt den Einsatz der erfindungsgemäßen Einrichtung bei einem Meßgerät für die paramagnetische Sauerstoffmessung, das in bekannter Weise aufgebaut ist und im wesentlichen aus einer von dem Meßgas 10 durchströmten Meßkammer 11 besteht, in welche einander gegenüberliegend zwei Leitungen 12 und 12' münden, die mit einem Vergleichsgas 13, beispielsweise Stickstoff oder Luft, gespeist werden. Eine der beiden Zuführungen von Vergleichsgas in die Meßkammer, hier die Zuführung 12', liegt an ihrer Einmündung in einem magnetischen Wechselfeld. Die aufgrund der paramagnetischen Eigenschaften des Sauerstoffs im Meßgas hervorgerufenen Druckwechsel werden mittels eines in einer Querverbindung 14 der Zuleitungen 12 und 12' liegenden Strömungsfühler 15 in dem Sauerstoffgehalt des Meßgases proportionale elektrische Ausgangssignale umgewandelt, die einer meßwertverarbeitenden Schaltung 16 zugeführt werden.

Um den das Meßergebnis beeinflussenden umgebungs- oder herkunftsbedingten Druckschwankungen des Meßgases zu begegnen, ist ein Druckaufnehmer 4' vorgesehen, der mittels einer Anschlußleitung 3' an die meßgasführende Ausgangsleitung 1' des Sauerstoff-Meßgeräts angeschlossen ist. Als Schutzgas für den Druckaufnehmer 4' wird hier in vorteilhafter Weise das Vergleichsgas 13 benützt, welches über eine von der Vergleichsgaszuführung abzweigende Leitung 7' dem Druckaufnehmer 4' bzw. der Anschlußleitung 3' zugeführt wird. Die Leitungen 3' und 7' sind so ausgelegt bzw. mit Drosselorganen 17 versehen, daß eine Schutzgasströmung in der Größenordnung von 3 bis 10 ml/min aufrechterhalten wird bei einer Meßgasströmung in der Leitung 1' von 300 bis 1000 ml/min.
Das elektrische Ausgangssignal des Meßwertaufnehmers wird über eine Leitung 5' der Meßwertverarbeitung 16 zugeführt und dort zur Berechnung des Korrekturwerts für das aus dem Strömungsfühler 15 kommende Meßsignal eingesetzt.

## Patentansprüche

1. Meßgerät zur paramagnetischen Sauerstoffmessung, mit
- einer Meßkammer (11) mit einer ein Meßmedium führenden Zu- und einer Ableitung (1'),
- zwei in der Meßkammer mündenden, einander gegenüberliegenden Zuführungen (12, 12') für ein Vergleichsgas, von denen eine (12') in einem Wechselmagnetfeld liegt,
- einen in einer gasleitenden Querverbindung (14) der Zuführungen (12, 12') angeordneten Strömungsfühler (15), dessen Ausgangssignal ein Maß für den Sauerstoffgehalt des Meßmediums ist,
**dadurch gekennzeichnet**,
- daß ein Druckaufnehmer (4') über eine Anschlußleitung (3') an die das Meßmedium führende Zu- oder die Ableitung (1') der Meßkammer (11) angeschlossen ist,
- daß eine Leitung (7') eine das Vergleichsgas (13) führende Leitung mit der Anschlußleitung (3') verbindet, in der eine Gasströmung aufrechterhalten wird, die gleich oder um einiges größer ist als die Diffusionsgeschwindigkeit des Meßgases in Richtung auf den Druckaufnehmer (4'), und
- daß mit dem Ausgangssignal des Druckaufnehmers (4') das des Strömungsfühlers (15) korrigiert wird.

## Claims

1. Measuring device for paramagnetic oxygen measurement, having
- a measuring chamber (11) with an incoming line and outgoing line (1') carrying a measuring medium,
- two supply lines (12, 12'), opening in the measuring chamber and lying opposite each other, for a reference gas, one supply line (12') lying in an alternating magnetic field,
- a flow sensor (15) arranged in a gas-conducting cross connection (14) of the supply lines (12, 12'), the output signal of which flow sensor is a measure for the oxygen content of the measuring medium,
characterized in that
- a pressure sensor (4') is connected by way of a connecting line (3') to the incoming or outgoing line (1') of the measuring chamber (11) which carries the measuring medium,
- a line (7') connects a line carrying the reference gas (13) to the connecting line (3') in which a gas flow is maintained which is equal to or somewhat greater than the diffusion speed of the measuring gas in the direction of the pressure sensor (4'), and
- with the output signal of the pressure sensor (4') that of the flow sensor (15) is corrected.

## Revendications

1. Appareil de mesure paramagnétique de teneur en oxygène, comportant
- une chambre (11) de mesure comportant un conduit d'entrée d'un fluide, dont on veut connaître la teneur en oxygène et un conduit (1') de sortie,
- deux conduits (12, 12') d'alimentation, débouchant dans la chambre de mesure et se trouvant en face l'un de l'autre, en un gaz de comparaison, l'un (12') de ces conduits se trouvant dans un champ magnétique alternatif,
- un détecteur (15) d'écoulement qui est disposé dans un passage transversal (14) de gaz entre les conduits (12, 12') d'alimentation et dont le signal de sortie est une mesure de la teneur en oxygène du fluide, dont on veut connaître la teneur en oxygène,
caractérisé en ce que
- un capteur (4') de pression communique, par l'intermédiaire d'un conduit (3') de raccordement avec le conduit d'alimentation en fluide, dont on veut connaître la teneur en oxygène ou avec le conduit (1') de sortie de la chambre (11) de mesure,
- un conduit (7') fait communiquer un conduit du gaz (13) de comparaison avec le conduit (3') de raccordement, dans lequel un courant de gaz, qui est égal ou un peu supérieur à la vitesse de diffusion du gaz dont on veut connaître la teneur en oxygène en direction du capteur (4') de pression, est maintenu et
- le signal de sortie du détecteur (15) d'écoulement est corrigé par le signal de sortie du capteur (4') de pression.
